Europäisches Patentamt

(19) European Patent Office

Office européen des brevets

(11) Numéro de publication: **0 066 765**
**B1**

(12) **FASCICULE DE BREVET EUROPEEN**

(45) Date de publication du fascicule du brevet:
12.09.84

(51) Int. Cl.³: **F 16 D 55/40,** F 16 D 25/063

(21) Numéro de dépôt: **82104505.1**

(22) Date de dépôt: **24.05.82**

(54) **Embrayage ou frein à disques multiples avec dispositif d'écartement des disques.**

(30) Priorité: **05.06.81 FR 8111175**

(43) Date de publication de la demande:
**15.12.82 Bulletin 82/50**

(45) Mention de la délivrance du brevet:
**12.09.84 Bulletin 84/37**

(84) Etats contractants désignés:
**BE DE GB IT NL SE**

(56) Documents cités:
**DE - A - 1 804 033**
**DE - A - 2 006 302**
**FR - A - 1 434 824**
**FR - A - 2 370 890**
**FR - A - 2 402 121**
**US - A - 2 260 189**
**US - A - 2 518 016**

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Aliouate, Ali, 52-54 rue de Fontenay,**
**F-94300 Vincennes (FR)**
Inventeur: **Leys, Edouard, 12, rue Léon Martine,**
**F-92290 Chatenay-Malabry (FR)**

(74) Mandataire: **Casalonga, Axel et al, BUREAU D.A.**
**CASALONGA OFFICE JOSSE & PETIT**
**Baaderstrasse 12-14, D-8000 München 5 (DE)**

## Description

L'invention concerne les embrayages ou freins à disques multiples, en particulier ceux utilisés dans les boîtes de vitesses automatiques des véhicules automobiles.

Ces organes, embrayages ou freins, fonctionnent généralement dans un bain d'huile et comportent alternativement des disques extérieurs, généralement lisses, qui sont libres axialement mais solidaires en rotation par un crantage extérieur avec un des organes tournant pour un embrayage, ou avec une partie fixe pour un frein, et des disques intérieurs, généralement munis sur leurs deux faces d'une garniture de friction pour augmenter le coefficient de frottement, et qui sont libres axialement mais solidaires en rotation par un crantage intérieur d'un arbre ou d'un organe rotatif que l'on désire entraîner en rotation ou freiner. En général un piston hydraulique annulaire fournit la poussée d'embrayage à l'empilement des disques imbriqués, et la multiplication de ces disques permet d'obtenir un couple très important sous un volume réduit et avec une poussée axiale qui reste dans des limites raisonnables.

Lorsqu'on relâche la pression d'huile agissant sur ce piston annulaire, un ressort de rappel ramène celui-ci dans une position qui laisse un jeu global pour l'ensemble des disques extérieurs et intérieurs. Toutefois, ce jeu ne se répartit pas équitablement entre les diverses interfaces de disques et en outre ces disques amorcent souvent des mouvements d'oscillation, qui peuvent être particulièrement importants pour certains régimes de rotation, et qui amènent les disques intérieurs en contact alternatif avec les disques extérieurs, d'où il résulte un couple de traînée non négligeable constituant une perte d'énergie, et également des usures plus ou moins ponctuelles et des brûlures des organes, malgré le bain d'huile qui forme refroidissement et lubrification. Enfin, l'ensemble risque naturellement d'être bruyant.

Pour éviter ces inconvénients, il est donc nécessaire d'assurer une répartition équitable des jeux entre les divers interfaces de disques, et en même temps d'empêcher la vibration axiale de ces disques. Pour cela il a déjà été préconisé de réaliser des dispositifs d'écarteurs élastiques constitués par des pattes découpées, ou plus généralement rivetées sur les disques extérieurs lisses, mais ces solutions manquent de fiabilité en raison de la minceur nécessaire des lames élastiques.

Une autre solution décrite dans US-A N° 2260189 consiste à relier les disques par des tiges parallèles à l'axe, fixées à un carter et pouvant coulisser dans les disques, les écarteurs élastiques étant constitués à chaque niveau par un ressort de configuration circulaire présentant un trou central suffisant pour permettre à ce ressort d'être enfilé sur la tige en étant comprimé entre deux disques extérieurs successifs. Dans ce cas, la pile complète des disques extérieurs et intérieurs ne constitue pas un sous-ensemble autonome.

D'autres constructeurs ont imaginé de fixer, sur un disque extérieur sur deux, un petit cylindre de caoutchouc qui est emmanché à force dans un trou très étroit par une extrémité effilée, puis recoupé à la longueur voulue pour constituer une entretoise élastique. Cependant, cette solution est d'un montage difficile et peu précis, et manque de fiabilité dans le temps.

Le but de l'invention est de réaliser un dispositif d'écartement élastique répondant aux exigences posées, mais sans présenter les inconvénients précités.

L'invention consiste à disposer dans les pattes extérieures d'immobilisation des disques extérieurs, et dans au moins trois positions écartées à 120° autour de l'axe de l'ensemble, des tiges cylindriques parallèles à l'axe, fixées dans un des disques extérieurs et traversant tous les autres disques dans des orifices appropriés, en interposant chaque fois un ressort cylindrique autour de ladite tige et entre deux disques extérieurs lisses successifs.

Lesdits ressorts cylindriques comportent un passage central d'un diamètre légèrement supérieur au diamètre extérieur de ladite tige, et ils peuvent être constitués par de simples ressorts à boudin. En variante, ils peuvent être constitués par des bagues annulaires en élastomère de section rectangulaire, ou elliptique ou encore à flancs concaves.

D'autres particularités de l'invention apparaîtront dans la description qui va suivre d'un mode de réalisation pris comme exemple et représenté sur le dessin annexé, sur lequel:

la fig. 1 est une demi-coupe axiale d'un ensemble d'embrayage coupée selon I-I de la fig. 2, et

la fig. 2 est une coupe transversale selon II-II de la fig. 1.

Le premier organe 1, qui est fixe s'il s'agit d'un frein ou solidaire d'un des arbres 2 s'il s'agit d'un embrayage, comporte intérieurement un cylindre annulaire 3 dans lequel peut se déplacer, sous l'effet d'une alimentation hydraulique sous pression, un piston annulaire 4 destiné à comprimer l'empilement de disques. L'autre organe est constitué par un arbre 5 situé à l'intérieur de l'organe 1. Il peut s'agir d'un véritable arbre plein ou de l'enveloppe extérieure d'un train épicycloïdal par exemple.

L'empilement de disques comprend d'une manière habituelle des disques extérieurs lisses 6, qui comportent des pattes 7 assurant l'immobilisation angulaire relative de chacun des disques 6 par rapport à l'organe externe 1 tout en pouvant coulisser axialement dans une encoche 8 pratiquée dans une paroi cylindrique 9 de l'organe 1. L'empilement de disques comprend par ailleurs des disques intérieurs 10 généralement munis d'une garniture de friction sur chacune de leurs faces. Ces disques comportent un crantage intérieur 11 leur permettant d'assurer un clavetage coulissant sur des cannelures 12 situées à la périphérie de l'arbre 5, plein ou creux.

Lorsque le cylindre 3 est alimenté en huile sous pression, le piston 4 presse l'empilement des disques contre la paroi opposée de l'organe 1 et produit de ce fait un couple de liaison entre les deux organes 1 et 5 d'autant plus important que le nombre de disques est plus élevé.

Inversement, lorsqu'on relâche la pression, ce couple diminue mais ne s'annule pas tout à fait. Pour éviter une poussée résiduelle du piston 4 on prévoit d'une manière habituelle des ressorts de rappel 13 destinés à ramener le piston 4 en position de repos, position dans laquelle il laisse subsister un jeu global pour l'ensemble des disques 6 et 10. Mais cela n'est pas encore suffisant car, comme on l'a exposé plus haut, les disques de l'un et l'autre type entrent généralement en oscillation, ce qui les amène alternativement en contact mutuel, d'où il résulte notamment un couple de traînée.

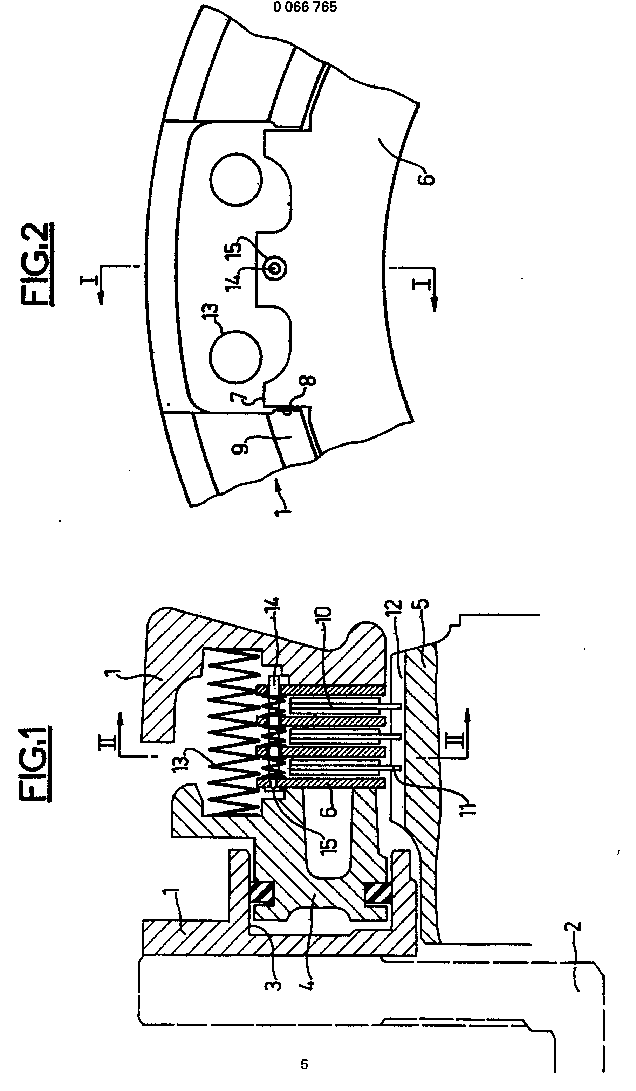

Conformément à l'invention, pour assurer l'écartement mutuel des disques extérieurs 6 avec répartition uniforme du jeu, et empêcher l'oscillation de ces disques, on utilise des tiges de montage 14 qui sont disposées parallèlement à l'axe, de préférence au nombre de trois réparties à 120° l'une de l'autre par rapport à cet axe, et qui sont fixées chacune dans un des disques lisses 6, par exemple celui d'extrémité comme représenté sur la fig. 1. D'autre part, chacune de ces tiges 14 traverse l'ensemble des autres disques dans des orifices appropriés, la tige 14 et les orifices étant de préférence disposés dans les pattes 7 d'immobilisation ou dans certaines d'entre elles.

En outre, dans chaque intervalle entre deux disques extérieurs lisses 6 successifs on vient placer un ressort cylindrique 15 enfilé sur la tige 14. Ce ressort peut en particulier être constitué par un ressort à boudin dont le diamètre intérieur est légèrement supérieur au diamètre extérieur de la tige 14. Les divers ressorts 15 sont naturellement tous identiques au point de vue dimension comme au point de vue tarage, et ils viennent à l'état comprimé se loger dans l'espace correspondant à l'épaisseur globale d'un disque intérieur garni 10 et de ses garnitures.

La fabrication est donc extrêmement aisée, puisqu'il s'agit de pièces mécaniques courantes, non particulièrement fragiles ni onéreuses, et le montage extrêmement facile puisqu'il suffit de réaliser l'empilement alternatif des disques extérieurs et intérieurs alternatifs de la manière usuelle en se contentant à chaque niveau d'enfiler un ressort 15 sur chacune des tiges 14.

A l'état de relâchement de l'embrayage ou du frein, l'ensemble des ressorts 15 vient suppléer l'effet des ressorts de rappel 13, et répartissent uniformément le jeu entre les divers disques lisses 6, ce qui évite d'une part que certains disques intérieurs demeurent pressés et, d'autre part, que certains autres disques intérieurs 10 disposent d'un jeu excessif leur permettant d'entrer en oscillation. En outre, dans cet état, le refroidissement et la lubrification des interfaces entre les divers disques sont assurés dans des conditions idéales grâce à la répartition des jeux, et la circulation de l'huile n'est entravée en aucune manière par les ressorts 15 et les tiges 14.

A titre de variante, les ressorts à boudin 15 pourraient être remplacés par des bagues annulaires en caoutchouc ou en élastomère comportant de la même façon un trou central pour permettre leur enfilement sur la tige 14 correspondante, ces bagues ayant une section rectangulaire, ou encore elliptique ou à flancs concaves. Ce qui précède reste valable dans ce cas, y compris la grande facilité de montage et l'absence de fragilité, avec en outre un effet d'amortissement supplémentaire.

## Revendications

1. Organe d'accouplement du type embrayage ou frein à disques multiples comportant des disques extérieurs (6) solidaires en rotation d'un des organes (1) à accoupler, et des disques intérieurs (1) solidaires en rotation d'un autre de ces organes (5), avec en outre des dispositifs d'écartement élastiques entre les divers disques extérieurs (6), comportant, à au moins trois emplacements régulièrement répartis autour de la pile des disques extérieurs, des tiges parallèles à l'axe, les écarteurs élastiques étant constitués à chaque niveau par un ressort de configuration circulaire présentant un trou central suffisant pour permettre à ce ressort d'être enfilé sur la tige en étant comprimé entre deux disques extérieurs successifs, caractérisé par le fait que chacune des tiges (14) est fixée uniquement à l'un des disques extérieurs (6) et qu'elle coulisse seulement dans les autres disques extérieurs (6) à travers des orifices appropriés, de manière que la pile complète des disques extérieurs (6) et intérieurs (10) puisse être constituée en un sous-ensemble autonome simplement introduit en place dans l'embrayage.

2. Organe d'accouplement selon la revendication 1, caractérisé par le fait que lesdits ressorts de configuration circulaire sont constitués par des ressorts à boudin.

3. Organe d'accouplement selon la revendication 1, caractérisé par le fait que lesdits ressorts de configuration circulaire sont constitués chacun par une bague annulaire en élastomère d'une section rectangulaire, elliptique ou à flancs concaves.

## Patentansprüche

1. Mehrscheiben-Kupplung oder -Bremse mit Spreizvorrichtung der Scheiben, enthaltend äussere Scheiben (6), die mit einem (1) der zu kuppelnden Organe drehfest verbunden sind, sowie innere Scheiben (10), die mit dem anderen (5) dieser Organe drehfest verbunden sind, ferner mit elastischen Spreizvorrichtungen zwischen den verschiedenen äusseren Scheiben (6), die wenigstens drei über den Scheibenstapel der äusseren Scheiben regelmässig verteilte Stellungen umfassen, parallel zur Achse stehende Stangen, wobei die elastischen Spreizvorrichtungen in jeder Höhe aus einer Feder kreisförmiger Konfiguration bestehen, die ein mittiges Loch enthält, das hinreichend gross ist, dass diese Feder über die Stange geschoben werden kann und dabei zwischen zwei aufeinanderfolgenden äusseren Scheiben zusammengedrückt wird, dadurch gekennzeichnet, dass jede dieser Stangen (14) nur an eine dieser äusseren Scheiben (6) befestigt ist und sie nur in den anderen äusseren Scheiben (6) durch entsprechende Öffnungen gleitet, so dass der gesamte Scheibenstapel mit den äusseren (6) und inneren (10) Scheiben zu einer autonomen Baugruppe zusammengesetzt werden kann, die sich einfach in die Kupplung an ihren Platz einscheiben lässt.

2. Kupplungsorgan gemäss Anspruch 1, dadurch gekennzeichnet, dass es sich bei den genannten Federn runder Konfiguration um Schraubenfedern handelt.

3. Kupplungsorgan gemäss Anspruch 1, dadurch gekennzeichnet, dass die genannten Federn runder Konfiguration jeweils aus einem Kreisring aus einem Elastomer mit rechteckigem oder elliptischem Querschnitt oder mit einem Querschnitt mit konkaven Flanken bestehen.

**Claims**

1. A coupling device of the multi-disc clutch or brake type comprising outer discs (6) fixed in rotation to one (1) of the members being coupled, and inner discs (10) fixed in rotation to another (5) of these members with, in addition, elastic separating devices between the various outer discs (6), comprising, at at least three positions regularly spaced round the outer disc stack, rods which are parallel to the axis, with the elastic separators consisting at each level of a circular configuration spring having a big enough centre hole to allow this spring to be threaded onto the rod as well as to be compressed between two successive outer discs, characterized in that each of the rods (14) is fixed only to one of the outer discs (6) through suitable holes so that the complete pile of outer (6) and inner (10) discs can be made into a self-contained sub-assembly which is simply inserted into place in the clutch.

2. The coupling device according to claim 1, characterized in that the said circular configuration springs consist of helical springs.

3. The coupling device according to claim 1, characterized in that the said circular configuration springs each consist of an annular ring of elastomer having a rectangular or elliptical cross-section or having concave sides.

0 066 765

FIG.1

FIG.2